(19) Europäisches Patentamt
European Patent Office
Office européen des brevets

(11) EP 2 749 574 A1

(12) EUROPEAN PATENT APPLICATION
published in accordance with Art. 153(4) EPC

(43) Date of publication:
**02.07.2014 Bulletin 2014/27**

(21) Application number: **12829072.3**

(22) Date of filing: **11.07.2012**

(51) Int Cl.:
***C08B 3/20*** *(2006.01)* ***C08B 3/06*** *(2006.01)*
***C08J 3/12*** *(2006.01)* ***C08L 1/10*** *(2006.01)*
***C08L 101/00*** *(2006.01)*

(86) International application number:
**PCT/JP2012/067753**

(87) International publication number:
**WO 2013/031391 (07.03.2013 Gazette 2013/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.08.2011 JP 2011185041**

(71) Applicant: **Olympus Corporation**
**Shibuya-ku**
**Tokyo 151-0072 (JP)**

(72) Inventors:
- **SHIRAMIZU Kohei**
  **Tokyo 151-0072 (JP)**
- **LIN Lianzhen**
  **Kyoto-shi**
  **Kyoto 600-8813 (JP)**

(74) Representative: **Kuhnen & Wacker**
**Patent- und Rechtsanwaltsbüro**
**Prinz-Ludwig-Straße 40A**
**85354 Freising (DE)**

# (54) CELLULOSE NANOFIBERS AND METHOD FOR PRODUCING SAME, COMPOSITE RESIN COMPOSITION, MOLDED BODY

(57) Cellulose nanofibers have an average degree of polymerization of 600 or more to 30000 or less, an aspect ratio of 20 or more to 10000 or less, an average diameter of 1 nm or more to 800 nm or less, and an Iβ-type crystal peak in an X-ray diffraction pattern, in which a hydroxyl group in the cellulose nanofibers is esterified and has a modification degree of 1.0 or more based on all of the hydroxyl groups.

*FIG. 1*

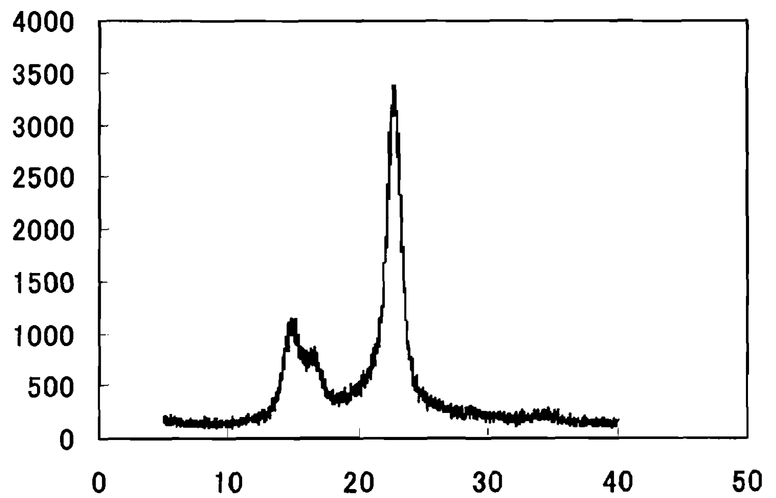




Printed by Jouve, 75001 PARIS (FR)

## Description

### Technical Field of the Invention

The present invention relates to cellulose nanofibers, a method for producing the same, a composite resin composition, and a molded body.

Priority is claimed on Japanese Patent Application No. 2011-185041, filed August 26, 2011, the content of which is incorporated herein by reference.

### Background Art

Cellulose nanofibers have been used as a reinforcing material of a polymer composite material in the related art.

The cellulose nanofibers are generally obtained by mechanically shearing cellulose fibers such as pulp or the like; however, in recent years, a method for defibrating a fibrous raw material using an ionic liquid has been proposed (PTL 1).

In the method disclosed in PTL 1, since it is not necessary to sufficiently perform mechanical shearing, there is no concern that the fibers are damaged, and the method is excellent in terms of its ability to easily obtain cellulose nanofibers with high strength and a high aspect ratio.

Further, a method for alkyl-esterifying a hydroxyl group of cellulose nanofibers in order to increase affinity of the cellulose nanofibers obtained by the above method with a polymer composite material has been proposed (PTL 2).

As disclosed in PTL 2, the cellulose nanofibers are reacted with acid anhydride such as acetic anhydride or butyric anhydride in order to obtain the alkyl-esterified cellulose nanofibers in the related art.

However, in the modification method in the related art, it is difficult to obtain cellulose nanofibers whose modification degree is more than 1.0, and the upper limit of the thermal decomposition temperature of the obtained cellulose nanofibers is 320°C, and there is room for improvement in terms of the heat resistance of the cellulose nanofibers.

In addition, since when the modification degree is high, kneading performance with a hydrophobic resin such as polypropylene or polycarbonate is improved, and therefore cellulose nanofibers having high modification degrees are desired.

Further, since when acid anhydride used as a modifier is reacted with a hydroxyl group, acids are generated, it causes damage to cellulose nanofibers by hydrolyzing and reduces the reinforcement efficacy of a resin.

On the other hand, acetylated cellulose nanowhiskers using vinyl acetate instead of acids have been reported (NPL 1). The cellulose nanowhiskers disclosed in NPL 1 are excellent from the viewpoint that cellulose is not damaged and the modification degree is high since a hydroxyl group is modified under mild conditions. Citation List

### Patent Literature

[PTL 1] Japanese Unexamined Patent Application, First Publication No. 2009-179913

[PTL 2] Published Japanese Translation No. H11-513425 of the PCT International Publication

### Non-Patent Literature

[NPT 1] Macromol. Biosci., volume 9, pp. 997 to 1003, 2009

### Summary of Invention

### Problems to be Solved by the Invention

However, although the acetylated cellulose nanowhiskers obtained by the method disclosed in NPT 1 have a high modification degree of the hydroxyl group, the value of which is 1.6, the crystallinity thereof shows a low degree, the value of which is 74%. Consequently, the reinforcement efficacy of a resin is poor.

In light of the above problems, an object of the present invention is to provide cellulose nanofibers, which have a high modification degree of a hydroxyl group, a high degree of crystallinity, and excellent reinforcement efficacy, a method for efficiently producing the cellulose nanofibers, a composite resin composition containing the cellulose nanofibers, and a molded body formed by molding the composite resin composition.

Means for Solving the Problem

According to a first aspect of the present invention, cellulose nanofibers have an average degree of polymerization of 600 or more to 30000 or less, an aspect ratio of 20 or more to 10000 or less, an average diameter of 1 nm or more to 800 nm or less, and an Iβ-type crystal peak in an X-ray diffraction pattern, in which a hydroxyl group in the cellulose nanofibers is ester-modified and has a modification degree of 1.0 or more based on all of the hydroxyl groups.
According to a second aspect of the present invention, a thermal decomposition temperature of the cellulose nanofibers may be equal to or more than 330°C.
According to a third aspect of the present invention, a saturated absorptivity of the cellulose nanofibers in an organic solvent having an SP value of 8 or more to 13 or less may be 300% or more to 5000% or less by mass.
According to a fourth aspect of the present invention, the organic solvent may be a water-insoluble solvent.
According to a fifth aspect of the present invention, the X-ray diffraction pattern of the cellulose nanofibers, in which the range of $\theta$ is 0 to 30, have one or two peaks when $\theta$ satisfies the equation of $14 \leq \theta \leq 18$, may have one or two peaks when $\theta$ satisfies the equation of $20 \leq \theta \leq 24$, and otherwise have no peaks.
According to a sixth aspect of the present invention, a composite resin composition may contain the cellulose nanofibers in a resin.
According to a seventh aspect of the present invention, a molded body may be formed by molding the composite resin composition.
According to an eighth aspect of the present invention, a method for producing cellulose nanofibers may include a process of ester-modifying a hydroxyl group of cellulose nanofibers which have an average degree of polymerization of 600 or more to 30000 or less, an aspect ratio of 20 or more to 10000 or less, an average diameter of 1 nm or more to 800 nm or less, and an Iβ-type crystal peak in an X-ray diffraction pattern, using vinyl carboxylate.
According to a ninth aspect of the present invention, a method for producing cellulose nanofibers may include a process of swelling a cellulose raw material in a solution containing an ionic liquid; and adding vinyl carboxylate thereto; filtering; and washing the cellulose raw material.

Effects of Invention

According to the cellulose nanofibers, the method for producing the same, the composite resin composition, and the molded body described above, it is possible to provide cellulose nanofibers, which have a high modification degree of a hydroxyl group, a high degree of crystallinity, and excellent reinforcement efficacy, a method for efficiently producing the cellulose nanofibers, a composite resin composition containing the cellulose nanofibers, and a molded body formed by molding the composite resin composition.

Brief Description of the Drawings

FIG. 1 illustrates results of analyzing X-ray diffraction of cellulose nanofibers according to an embodiment of the present invention.

Embodiments of the Invention

[Cellulose nanofiber]

The average degree of polymerization of cellulose nanofibers according to an embodiment of the present invention is in the range of from 600 to 30000, preferably in the range of from 600 to 5000, and more preferably in the range of from 800 to 5000. In the case where the average degree of polymerization is 600 or more, sufficient reinforcement efficacy can be obtained. For example, such cellulose nanofibers can be produced by a method using an ionic liquid. In the case where the degree of polymerization is 30000 or less, a problem such that kneading with resins is difficult to perform does not occur, because the viscosity during the kneading does not become high.
The aspect ratio of the cellulose nanofibers according to the embodiment of the present invention is 20 to 10000 and preferably 20 to 2000, from the viewpoint of reinforcement efficacy. The term "aspect ratio" of the present specification and claims means the ratio of an average fiber length to an average diameter (average fiber length/average diameter) in cellulose nanofibers. In the case where the aspect ratio is 20 or more, sufficient reinforcement efficacy can be obtained. Further, the aspect ratio is 10000 or less, moldability of a composite resin composition containing the cellulose nanofibers is excellent. Furthermore, when the aspect ratio is in the range described above, in the cellulose nanofibers, the entanglement between molecules and the network structure become strong, thereby improving the mechanical strength of a molded body.
The average diameter of the cellulose nanofibers according to the embodiment of the present invention is 1

nm to 800 nm, preferably 1 nm to 300 nm, and more preferably 1 nm to 100 nm. In the case where the average diameter thereof is 1 nm or more, the cost for production is low, and in the case where the average diameter thereof is 800 nm or less, the aspect ratio thereof is hard to decrease. As a result, sufficient reinforcement efficacy can be obtained at low cost.

A cellulose I type is composite crystals of Iα-type crystals and Iβ-type crystals, and cellulose derived from high-grade plants such as cotton includes a large quantity of Iβ-type crystals, on the other hand, bacteria cellulose includes a large quantity of Iα-type crystals.

Since the cellulose nanofibers according to the embodiment of the present invention include an Iβ-type crystal peak in an X-ray diffraction pattern, the X-ray diffraction pattern in which the range of θ is 0 to 30 indicates a pattern unique to the Iβ-type crystals as shown in FIG. 1. It is preferable that the pattern have one or two peaks when θ satisfies the equation of $14 \leq \theta \leq 18$, have one or two peaks when θ satisfies the equation of $20 \leq \theta \leq 24$, and otherwise have no peaks.

Further, since the cellulose nanofibers according to the embodiment of the present invention mainly includes the Iβ-type crystals, the reinforcement efficacy thereof is excellent when compared to the bacteria cellulose with a large quantity of Iα-type crystals.

The cellulose nanofibers according to the embodiment of the present invention are ester-modified to improve functionality.

In order to use the cellulose nanofibers as a composite material, it is necessary to chemically modify hydroxyl groups on the surface of the cellulose nanofibers by a modifying group so as to reduce the number of the hydroxyl groups. The cellulose nanofibers are easily dispersed into a polymer material by preventing strong adherence between cellulose nanofibers due to hydrogen bonds, and therefore excellent interfacial bonds can be formed between the cellulose nanofibers and the polymer material.

The ratio of the hydroxyl groups, which are ester-modified by a modifying group, to the all of the hydroxyl groups in the cellulose nanofibers according to the embodiment of the present invention is preferably 1.0 or more, more preferably from 1.0 to 10, and particularly preferably from 1.0 to 2.5.

The esterification agents that modify the modifying group are preferably vinyl carboxylate, more preferably vinyl acetate, vinyl propionate, vinyl butyrate, vinyl valerate, vinyl pivalate, vinyl caproate, vinyl caprate, vinyl laurate, vinyl myristate, vinyl palmitate, vinyl stearate, vinyl cyclohexane carboxylate, vinyl octylate, vinyl methacrylate, vinyl crotonate, vinyl sorbate, vinyl benzoate, or vinyl cinamate, still more preferably vinyl acetate, vinyl propionate, vinyl butyrate, vinyl valerate, vinyl pivalate, vinyl caproate, vinyl caprate, vinyl laurate, vinyl myristate, vinyl palmitate, vinyl stearate, vinyl cyclohexane carboxylate, or vinyl octylate, and most preferably vinyl acetate, vinyl propionate, or vinyl butyrate.

A hydroxyl group of the cellulose nanofibers is modified with a high modification degree under a mild condition by using such esterification agents. Therefore, cellulose nanofibers in which cellulose is not damaged and heat resistance is excellent can be obtained.

In the case where the cellulose nanofibers which are ester-modified in the above way are used for a lipophilic resin, it is preferable that the saturated absorptivity of the cellulose nanofibers in an organic solvent with a solubility parameter (hereinafter, referred to as an "SP value") of 8 or more to 13 or less is 300% by mass to 5000% by mass. The cellulose nanofibers which are dispersed in the organic solvent having the above-described SP value have high affinity with a lipophilic resin, and high reinforcement efficacy.

Examples of the organic solvents having an SP value of 8 or more to 13 or less may include an acetic acid, ethyl acetate, butyl acetate, isobutyl acetate, isopropyl acetate, methyl propyl ketone, methyl isopropyl ketone, xylene, toluene, benzene, ethyl benzene, dibutyl phthalate, acetone, 2-propanol, acetonitrile, dimethylformamide, ethanol, tetrahydrofuran, methyl ethyl ketone, cyclohexane, carbon tetrachloride, chloroform, methylene chloride, carbon disulfide, pyridine, n-hexanol, cyclohexanol, n-butanol, and nitromethane.

As the organic solvent, a water-insoluble solvent (a solvent that is not mixed with water of 25°C at an arbitrary ratio) is more preferable, and examples thereof may include xylene, toluene, benzene, ethyl benzene, dichloromethane, cyclohexane, carbon tetrachloride, methylene chloride, ethyl acetate, carbon disulfide, cyclohexanol, and nitromethane. The cellulose nanofibers which are chemically modified in the above way can be dispersed in a water-insoluble solvent, and are easily dispersed in a lipophilic resin in which the conventional cellulose nanofibers are hard to disperse.

Since the cellulose nanofibers according to the embodiment of the present invention have heat resistance by being ester-modified, it is possible to impart the heat resistance to other materials by allowing the cellulose nanofibers to be mixed with other materials.

The thermal decomposition temperature of the cellulose nanofibers according to the embodiment of the present invention is preferably 330°C or more, and more preferably 350°C or more. A thermal decomposition temperature of 330°C or more is too high temperature for conventional cellulose nanofibers to withstand.

The degree of crystallinity of the cellulose nanofibers having the above-described structure according to the embodiment of the present invention is 80% or more. As described below in the description of the embodiment, while the degree of crystallinity of the cellulose nanowhiskers having a modification degree of 1.7 is 71 %, the degree of crystallinity of the cellulose nanofibers having the same modification degree of 1.7 according to the embodiment of the

present invention is 91 %, which is a considerably high value. Accordingly, the cellulose nanofibers according to the embodiment of the present invention have exceedingly excellent reinforcement efficacy on resins.

[Composite resin composition]

The composite resin composition according to the embodiment of the present invention includes the cellulose nanofibers in a resin.

As the above-described lipophilic resin in which the cellulose nanofibers according to the embodiment of the present invention can be dispersed, a resin which is sparingly soluble in water and widely used as an industrial material for which water resistance is needed is preferable. The lipophilic resin may be a thermoplastic resin or a thermosetting resin, and examples thereof may include a plant-derived resin, a resin using carbon dioxide as a raw material, an acrylonitrile-butadiene-styrene (ABS) resin, an alkylene resin such as polyethylene or polypropylene, a styrene resin, a vinyl resin, an acrylic resin, an amide resin, an acetal resin, a carbonate resin, an urethane resin, an epoxy resin, an imide resin, a urea resin, a silicone resin, a phenol resin, a melamine resin, an ester resin, an acrylic resin, an amide resin, a fluorine resin, a styrole resin, and engineering plastic. In addition, as the engineering plastic, polyamide, polybutylene terephthalate, polycarbonate, polyacetal, modified polyphenylene oxide, modified polyphenylene ether, polyphenylene sulfide, polyether ether ketone, polyether sulfone, polysulfone, polyamide imide, polyether imide, polyimide, polyarylate, or polyallyl ether nitrile is preferably used. Further, two or more kinds of these resins may be used as a mixture. Among these, polycarbonate is particularly good due to its high impact strength.

As the polycarbonate, generally used polycarbonate can be used. For example, aromatic polycarbonate which is produced by reacting an aromatic dihydroxy compound and a carbonate precursor can be preferably used.

Examples of the aromatic dihydroxy compound may include 2,2-bis(4-hydroxyphenyl)propane ("bisphenol A"), bis(4-hydroxyphenyl)methane, 1,1-bis(4-hydroxyphenyl)ethane, 2,2-bis(4-hydroxy-3,5-dimethylphenyl)propane, 4,4'-dihydroxydiphenyl, bis(4-hydroxyphenyl)cycloalkane, bis(4-hydroxyphenyl)sulfide, bis(4-hydroxyphenyl)sulfone, bis(4-hydroxyphenyl)sulfoxide, bis(4-hydroxyphenyl)ether, and bis(4-hydroxyphenyl)ketone.

Examples of the carbonate precursor may include a carbonyl halide, carbonyl ester, and a haloformate, and specific examples thereof may include phosgene, dihaloformate of a dihydric phenol, diphenyl carbonate, dimethyl carbonate, and diethyl carbonate.

As the polycarbonate used in the embodiment of the present invention, polycarbonate that does not contain an aromatic group may be used. As the polycarbonate that does not contain an aromatic group, alicyclic polycarbonate and aliphatic polycarbonate are listed as examples. A polycarbonate resin may be linear or branched. In addition, the polycarbonate resin may be a copolymer of a polymer, which is obtained by polymerizing the aromatic dihydroxy compound and the carbonate precursor, and other polymers.

The polycarbonate resin may be produced by a conventionally known method, and examples thereof may include an interfacial polymerization, a melt transesterification method, a pyridine method, and the like.

As the types of the resins in the composite resin composition according to the embodiment of the present invention, a hydrophilic resin may be included in addition to the lipophilic resin described above. With regard to the hydrophilic resin, unmodified cellulose nanofibers, or cellulose nanofibers which are chemically modified by a hydrophilic functional group such as a sulfonic acid group, a carboxylic acid group, or these chlorides may be preferably used due to their high dispersibility into the hydrophilic resin.

As the hydrophilic resin, polyvinyl alcohol and a resin which is subjected to a hydrophilic treatment are listed as examples. Among these, polyvinyl alcohol is particularly preferable for its low cost and high dispersibility of the cellulose nanofibers.

The composite resin composition according to the embodiment of the present invention may include an additive such as a filler, a flame retardant aid, a flame retardant, an antioxidant, a release agent, a colorant, or a dispersant in addition to those described above.

Examples of the filler to be used may include a carbon fiber, a glass fiber, clay, titanium oxide, silica, talc, calcium carbonate, potassium titanate, mica, montmorillonite, barium sulfate, a balloon filler, a bead filler, and a carbon nanotube.

Examples of the flame retardant to be used may include a halogen-based flame retardant, a nitrogen-based flame retardant, a metal hydroxide, a phosphorous based-flame retardant, an organic alkali metal salt, an organic alkali earth metal salt, a silicone-based flame retardant, and expanded graphite.

As the flame retardant aid, polyfluoroolefin, antimony oxide, or the like may be used.

As the antioxidant, a phosphorous-based antioxidant, a phenyl-based antioxidant, or the like may be used.

As the release agent, higher alcohol, carboxylic acid ester, a polyolefin wax, or polyalkylene glycol may be used.

As the colorant, an arbitrary colorant such as carbon black or phthalocyanine blue may be used.

As the dispersant, a dispersant in which the cellulose nanofibers can be dispersed in a resin may be used, and examples thereof may include an anionic, cationic, nonionic, or amphoteric surfactant, and a polymer dispersant, and

these may be used in combination.

Since the cellulose nanofibers according to the embodiment of the present invention have reinforcement efficacy as described above, the composite resin composition containing the cellulose nanofibers according to the embodiment of the present invention is excellent in terms of strength. Therefore, the composite resin composition according to the embodiment of the present invention is suitable for use in an application requiring strength.

Further, since the cellulose nanofibers according to the embodiment of the present invention have excellent dispersibility in a resin, the composite resin composition containing the cellulose nanofibers according to the embodiment of the present invention is excellent in terms of transparency. Accordingly, the composite resin composition according to the embodiment of the present invention can maintain its transparency, and thus is suitable for use in an application requiring transparency.

Furthermore, since the cellulose nanofibers according to the embodiment of the present invention have excellent heat resistance when compared to the cellulose nanofibers in the related art, the composite resin composition containing the cellulose nanofibers according to the embodiment of the present invention is excellent in terms of heat resistance. Therefore, the composite resin composition according to the embodiment of the present invention is suitable for use in an application requiring heat resistance while maintaining transparency.

[Molded body]

The molded body according to the embodiment of the present invention is formed by molding the composite resin composition. The method for molding the molded body is not particularly limited, but examples thereof may include various conventionally known molding methods such as an injection molding method, an injection compression molding method, an extrusion molding method, a blow molding method, a press molding method, a vacuum molding method, and a foam molding method.

Since the molded body according to the embodiment of the present invention contains the cellulose nanofibers according to the embodiment of the present invention, the strength or the heat resistance thereof is excellent. As the molded body, although not particularly limited, medical equipment, audio equipment, or the like are listed as examples. Such a molded body may be used for a molded body for a camera, a lens barrel, or the like, which particularly requires strength.

[Method for producing cellulose nanofibers]

(First Embodiment)

A method for producing cellulose nanofibers according to the present embodiment includes a process of ester-modifying a hydroxyl group of cellulose nanofibers, which have an average degree of polymerization of from 600 to 30000, an aspect ratio of 20 to 10000, an average diameter of 1 nm to 800 nm, and an Iβ-type crystal peak in an X-ray diffraction pattern, using vinyl carboxylate.

When a cellulose raw material is subjected to a defibration treatment in a solution containing an ionic liquid, the solution in which the cellulose raw material is dissolved is thickened. Consequently, according to the present embodiment, a method for performing a process of defibration by hydrolyzing a low crystalline cellulose part using sulfate in order to decrease the viscosity thereof and a process of chemical modification (ester-modification) in two steps (hereinafter, referred to as a "two-step method") is used.

According to the two-step method in the related art, since sulfate is used in the process of defibration and acid anhydride is used in the process of chemical modification, there is a concern that the cellulose nanofibers to be produced are damaged. In the present embodiment, since vinyl carboxylate is used in the process of chemical modification, a hydroxyl group of the cellulose nanofibers is modified with a high modification degree under mild conditions.

Therefore, cellulose nanofibers in which the cellulose is not damaged and the heat resistance thereof is excellent can be obtained.

The cellulose raw material used in the present embodiment is not particularly limited; however, examples thereof may include raw materials of natural cellulose such as linter, cotton, and hemp; pulp obtained by chemically treating wood such as kraft pulp or sulfide pulp; semi-chemical pulp; used paper or recycle pulp thereof, and the like. Among these, pulp obtained by chemically treating wood is preferable, linter with high average degree of polymerization is more preferable.when the cost, quality, and the burden on the environment are considered.

The shape of the cellulose raw material is not particularly limited, however, it is preferable that the cellulose raw material is used after being appropriately pulverized from the viewpoints of easiness of mechanical sheerness and accelerating permeation of solvents.

As the solution (hereinafter, referred to as a treatment solution) containing the ionic liquid, a solution containing an ionic liquid represented by the following chemical formula1 and an organic solvent is preferable.

[Chem. 1]

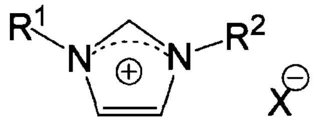

[In the formula, $R^1$ represents an alkyl group having 1 to 4 carbon atoms, $R^2$ represents an alkyl group having 1 to 4 carbon atoms or an allyl group. $X^-$ represents a halogen ion, pseudo-halogen, carboxylate having 1 to 4 carbon atoms, or thiocyanate.]

Examples of the ionic liquid may include 1-butyl-3-methylimidazolium chloride, 1-butyl-3-methylimidazolium bromide, 1-allyl-3-methylimidazolium chloride, 1-allyl-3-methylimidazolium bromide, and 1-propyl-3-methylimidazolium bromide.

It is also possible to defibrate the fiber raw material using only the ionic liquid, however, in the case where even fine fibers are likely to be dissolved due to excessively high solubility, it is preferable to add an organic solvent to the ionic liquid for use.

The type of the organic solvent to be added may be appropriately selected in consideration of compatibility with the ionic liquid, affinity with cellulose, solubility of a mixed solvent, viscosity, and the like, and particularly, it is preferable to use one or more of any of the organic solvents from among N,N-dimethylacetamide, N,N-dimethylformamide, 1-methyl-2-pyrrolidone, dimethylsulfoxide, acetonitrile, methanol, and ethanol.

The amount of the ionic liquid in the treatment solution may be appropriately adjusted since the amount of the ionic liquid depends on the types of the cellulose raw material, the ionic liquid, and the organic solvent, and the amount thereof is preferably 20% by mass or more from the viewpoints of swelling and solubility. In the case where an organic solvent having high solubility is used, the amount thereof is preferably 30% by mass or more, and in the case where an organic solvent having low solubility such as methanol is used, the amount thereof is preferably 50% by mass or more.

The amount of the cellulose raw material is preferably in the range of 0.5% by mass to 30% by mass based on the treatment liquid. In view of economic efficiency, the amount thereof is preferably 0.5% by mass or more, and more preferably 1% by mass or more. In view of uniformity of the defibration degree, the amount thereof is preferably 30% by mass or less, and more preferably 20% by mass.

As the modifier used in the present embodiment, the same modifier described above for the cellulose nanofibers according to the embodiment of the present invention may be used.

In the method of producing cellulose nanofibers according to the present embodiment, it is possible to obtain cellulose nanofibers having the properties described above for the cellulose nanofibers according to the embodiment of the present invention.

That is, according to the present embodiment, it is possible to obtain cellulose nanofibers having an average degree of polymerization from 600 to 30000, an aspect ratio of 20 to 10000, an average diameter of 1 nm to 800 nm, an Iβ-type crystal peak in an X-ray diffraction pattern, and a hydroxyl group which is ester-modified and whose modification degree is 1.0 or more.

(Second Embodiment)

A method for producing cellulose nanofibers of the present embodiment includes a process of swelling a cellulose raw material in a solution containing an ionic liquid, adding vinyl carboxylate thereto, filtering, and washing the cellulose raw material.

The method for producing the cellulose nanofibers according to the present embodiment is a method for performing a process of defibrating a cellulose raw material in a solution containing an ionic liquid and a process of chemically modifying a hydroxyl group of the cellulose nanofibers using vinyl carboxylate in one step (hereinafter, referred to a one-step method).

Since the one-step method of the present embodiment has a fewer number of processes compared to the two-step method in the related art, the one-step method has advantages in terms of management and cost. In addition, the amount of a solvent being used is small, so that the burden on the environment can be reduced.

The cellulose raw material and the solution containing an ionic liquid used in the present embodiment are the same as those described in the first embodiment.

Since the production method of the present embodiment is a one-step method which does not include a process of a sulfate treatment, the ionic liquid after the defibration treatment does not contain a hydrolytic agent. Therefore, recycling of the ionic liquid after the defibration treatment is easy.

In the method for producing the cellulose nanofibers of the present embodiment, the cellulose raw material is swollen in the solution containing an ionic liquid. The cellulose raw material is constituted by crystalline cellulose with high degree of crystallinity and a binding substance including lignin which is present between the crystalline cellulose, hemicellulose, and amorphous cellulose. The fine structure constituting cellulose is somewhat slackened by swelling the cellulose raw material, and enters a state in which it can be easily cleaved by an external force.

In the present embodiment, a process of adding vinyl carboxylate to the cellulose raw material, of filtering, and of washing the resultant is included.

As the vinyl carboxylate used in the present embodiment, the same vinyl carboxylate as described in the cellulose nanofibers according to the embodiment of the present invention may be used.

In the method for producing cellulose nanofibers according to the present embodiment, it is possible to obtain cellulose nanofibers having the properties described in the cellulose nanofibers according to the embodiment of the present invention.

Further, according to the present embodiment, since the process of a sulfide treatment is not included, there is no concern that the cellulose nanofibers will be damaged, cellulose nanofibers having heat resistance with a thermal decomposition temperature of 330°C or more can thereby be obtained.

Furthermore, the obtained cellulose nanofibers have high degree of crystallinity. The reason why such effects can be obtained is speculated as follows.

In the process of defibration treatment in the solution containing an ionic liquid, the cellulose raw material is swollen in the solution containing an ionic liquid. That is, the fine structure constituting cellulose is somewhat slackened and enters a state in which it can be easily cleaved by an external force. Here, among three hydroxyl groups which are present in the constituent unit of the cellulose, one hydroxyl group is exposed to the surface of the cellulose, and the other two hydroxyl groups are assumed to be related to formation of the crystal structure. In the one-step method of the present embodiment, since a modifier is directly added to the swollen crystalline cellulose, it is speculated that the hydroxyl group exposed to the surface of the cellulose is efficiently modified.

Further, in the one-step method according to the present embodiment, it is speculated that since a hydroxyl group is hydrophobized and amorphous cellulose becomes easily dissolved in a solvent by modifying the hydroxyl group of the swollen amorphous cellulose, the hydroxyl group is therefore easily removed by filtration.

[Examples]

Hereinafter, the present invention will be specifically described by Examples and Comparative Examples, but the present invention is not limited thereto.

(Example 1)

2 g filter paper cut into a 3 mm square with scissors was put into a 200 ml flask, and then 50 ml of N,N-dimethylacetamide and 60 g of an ionic liquid 1-butyl-3-methylimidazolium chloride were added to the flask, followed by stirring. Subsequently, a sulfuric acid aqueous solution was added thereto, stirred, and filtered to wash the solid content. Accordingly, cellulose nanofibers were obtained by treating the resultant with a homogenizer. The cellulose nanofibers were reacted with vinyl acetate for 45 minutes to be acetylated in dimethylformamide (DMF), and the resultant was washed, thereby obtaining acetylated cellulose nanofibers in which the two-step method was used. The modification degree of the acetylated cellulose nanofibers obtained at this time was 1.7, and the thermal decomposition temperature thereof was 350°C.

Subsequently, polycarbonate which was dissolved in dichloromethane in advance (PC, manufactured by Teijin Chemicals Ltd., Panlite L-1225L, refractive index: 1.58) was mixed with the acetylated cellulose nanofibers in the dichloromethane, and then dried, thereby obtaining a polycarbonate composite resin composition containing the acetylated cellulose nanofibers.

(Example 2)

2 g filter paper cut into a 3 mm square with scissors was put into a 200 ml flask, and then 50 ml of N,N-dimethylacetamide and 60 g of an ionic liquid 1-butyl-3-methylimidazolium chloride were added to the flask, followed by stirring. Subsequently, a sulfuric acid aqueous solution was added thereto, stirred, and filtered to wash the solid content. Accordingly, cellulose nanofibers were obtained by treating the resultant with a homogenizer. The cellulose nanofibers were reacted with vinyl acetate for 1 hour to be acetylated in N, N-dimethylformamide (DMF), and the resultant was washed, thereby obtaining acetylated cellulose nanofibers in which the two-step method was used. The modification degree of the acetylated cellulose nanofibers obtained at this time was 1.9, and the thermal decomposition temperature thereof was 350°C.

Subsequently, polycarbonate which was dissolved in dichloromethane in advance (PC, manufactured by Teijin Chemicals Ltd., Panlite L-1225L, refractive index: 1.58) was mixed with the acetylated cellulose nanofibers in the dichloromethane, and then dried, thereby obtaining a polycarbonate composite resin composition containing the acetylated cellulose nanofibers.

(Example 3)

15 g filter paper cut into a 3 mm square with scissors was put into a 300 ml flask, and then 100 ml of N,N-dimethylacetamide and 100 g of an ionic liquid 1-butyl-3-methylimidazolium chloride were added to the flask, followed by stirring. Subsequently, a sulfuric acid aqueous solution was added thereto, stirred, and filtered to wash the solid content. Accordingly, cellulose nanofibers were obtained by treating the resultant with a homogenizer. The cellulose nanofibers were reacted with vinyl acetate for 30 minutes to be acetylated in dimethylformamide (DMF), and the resultant was washed, thereby obtaining acetylated cellulose nanofibers in which the two-step method was used. The modification degree of the acetylated cellulose nanofibers obtained at this time was 1.3, and the thermal decomposition temperature thereof was 350°C.

Subsequently, polycarbonate which was dissolved in dichloromethane in advance (PC, manufactured by Teijin Chemicals Ltd., Panlite L-1225L, refractive index: 1.58) was mixed with the acetylated cellulose nanofibers in the dichloromethane, and then dried, thereby obtaining a polycarbonate composite resin composition containing the acetylated cellulose nanofibers.

(Example 4)

Butylated cellulose nanofibers in which the two-step method was used and a polycarbonate composite resin composition containing the butylated cellulose nanofibers were obtained by the same procedures as Example 1 except that vinyl butyrate was added instead of vinyl acetate. The modification degree of the silylated cellulose nanofibers obtained at this time was 1.5 and the thermal decomposition temperature thereof was 350°.

(Example 5)

15 g filter paper cut into a 3 mm square with scissors was put into a 300 ml flask, and then 100 ml of N,N-dimethylacetamide and 100 g of an ionic liquid 1-butyl-3-methylimidazolium chloride were added to the flask, followed by stirring. Subsequently, vinyl acetate was added thereto to react with each other, and filtered to wash the solid content. Accordingly, acetylated cellulose nanofibers in which the one-step method was used were obtained by treating the resultant with a homogenizer. The modification degree of the acetylated cellulose nanofibers obtained at this time was 1.3, and the thermal decomposition temperature thereof was 350°C.

Subsequently, polycarbonate which was dissolved in dichloromethane in advance (PC, manufactured by Teijin Chemicals Ltd., Panlite L-1225L, refractive index: 1.58) was mixed with the acetylated cellulose nanofibers in the dichloromethane, and then dried, thereby obtaining a polycarbonate composite resin composition containing the acetylated cellulose nanofibers.

(Reference Example 1)

2 g filter paper cut into a 3 mm square with scissors was put into a 200 ml flask, and then 50 ml of N,N-dimethylacetamide and 60 g of an ionic liquid 1-butyl-3-methylimidazolium chloride were added to the flask, followed by stirring. Subsequently, a sulfuric acid aqueous solution was added thereto, stirred, and filtered to wash the solid content. Accordingly, cellulose nanofibers were obtained by treating the resultant with a homogenizer. The obtained cellulose nanofibers were reacted with acetic anhydride to be acetylated, and the resultant was washed, thereby obtaining acetylated cellulose nanofibers in which the two-step method was used. The modification degree of the acetylated cellulose nanofibers obtained at this time was 0.9, and the thermal decomposition temperature thereof was 320°C.

Subsequently, polycarbonate which was dissolved in dichloromethane in advance (PC, manufactured by Teijin Chemicals Ltd., Panlite L-1225L, refractive index: 1.58) was mixed with the acetylated cellulose nanofibers in the dichloromethane, and then dried, thereby obtaining a polycarbonate composite resin composition containing the acetylated cellulose nanofibers.

(Reference Example 2)

Butylated cellulose nanofibers in which the two-step method was used and a polycarbonate composite resin composition containing the butylated cellulose nanofibers were obtained by the same procedures as Reference Example

1 except that butyric anhydride was added instead of acetic anhydride. The modification degree of the butylated cellulose nanofibers obtained at this time was 0.8 and the thermal decomposition temperature thereof was 320°C.

(Comparative Example 1)

A polycarbonate composite resin composition was obtained by the same method used in Reference Example 1 and using bacteria cellulose obtained by drying Nata de COCO (manufactured by Fujicco Co., Ltd., average degree of polymerization: 3000 or more, average aspect ratio: 1000 or more, average diameter: 70 nm).

(Comparative Example 2)

A polycarbonate composite resin composition was obtained by the same method as Reference Example 1 and using fine crystalline cellulose (manufactured by Merck Ltd., average degree of polymerization: 250, average aspect ratio: 10, crystals having a diameter of 1 μm to 10 μm are mixed).

The cellulose nanofibers and the composite resin compositions obtained from respective Examples, Reference Examples, and Comparative Examples were measured by the following test method, and the results thereof are listed in Table 1.

(1) Measurement of average degree of polymerization

The molecular weight was evaluated by viscometry (reference: Macromolecules, volume 18, pp 2394 to 2401, 1985).

(2) Aspect ratio and average diameter

The number average fiber diameter and the number average length of the cellulose nanofibers were evaluated by SEM analysis.

Specifically, a cellulose nanofiber dispersion was cast on a wafer so as to be observed by SEM. The values of fiber diameter and length were read out with respect to 20 or more strands of fibers for each of the obtained images. This operation was performed on at least 3 sheets of images of non-overlapping regions, thereby obtaining information on the diameter and the length of a minimum of 30 strands of fibers.

From the data of the diameter and the length of the fibers obtained as above, the number average fiber diameter and the number average length could be calculated, and the aspect ratio was then calculated from the ratio of the number average length to the number average fiber diameter. In the case where the aspect ratio was in the range of from 20 to 10000, it was indicated as ○ (excellent), and in the case where the aspect ratio was not in the range of from 20 to 10000, it was indicated as × (poor).

(3) Crystal structure analysis (XRD)

The crystal structure of the cellulose nanofibers was analyzed using a powder X-ray diffraction instrument Rigaku Ultima IV. In the cases where the X-ray diffraction pattern had one or two peaks when θ satisfied the equation of $14 \leq \theta \leq 18$, had one peak when θ satisfied the equation of $20 \leq \theta \leq 24$, and otherwise had no peaks, they were indicated as ○ (excellent), and in the other cases, they were indicated as Δ (possible). In addition, in the case where the crystal structure of the cellulose nanofibers was an Iβ-type crystal structure, it was indicated as ○ (excellent), and in the case where the crystal structure of the cellulose nanofibers was not the Iβ-type crystal structure, it was indicated as × (poor) in Examples, Reference Examples, and Comparative Examples.

(4) Thermal decomposition temperature (TG-DTA)

The cellulose nanofibers were measured using a thermal analysis apparatus THERMO plus TG8120. A graph in which the weight loss ratio was plotted on vertical axis and the temperature was plotted on the horizontal axis was drawn, and the temperature of the intersection point of a tangent at the time when the weight was largely reduced and a tangent before the weight was reduced was set to the thermal decomposition temperature.

(5) Evaluation method for modification degree A1 of hydroxyl group

The modification degree of the hydroxyl group was calculated from a strength corresponding characteristic band) of CH in the strength/ a strength of the characteristic band CH (before and after 1367 $cm^{-1}$) in the cellulose ring by FT-IR. In other words, a C=O group (before and after 1736 $cm^{-1}$) was obtained by modification, so the value was obtained by dividing the strength thereof by the strength of CH.

(5) Evaluation of saturated absorptivity R

First, cellulose nanofibers of a weight (W1) were dispersed in dimethylacetamide (SP value: 11.1), thereby preparing a dispersion of 2% by weight. Subsequently, the dispersion was put in a centrifuge flask, followed by centrifugation for 30 minutes at 4500 G, and a transparent solvent layer in the upper portion of the centrifuged dispersion was removed, and then a weight (W2) of a gel layer in the lower portion of the centrifuged dispersion was measured, thereby calculating the saturated absorptivity by the following formula.

$$R = W2/W1 \times 100\%$$

In the case where the saturated absorptivity was in the range of from 300% by mass to 5000% by mass, it was indicated as ○ (excellent), and in the case where the saturated absorptivity was not in the range, it was indicated as Δ (possible).

[Table 1]

| | Example 1 | Example 2 | Example 3 | Example 4 | Example 5 | Reference Example 1 | Reference Example 2 | Comparative Example 1 | Comparative Example 2 |
|---|---|---|---|---|---|---|---|---|---|
| Polymerization degree | 800 | 800 | 800 | 800 | 800 | 800 | 800 | 3000 | 250 |
| Aspect ratio | 100 | 100 | 100 | 100 | 100 | 50 | 50 | 1000 | 10 |
| Average diameter (nm) | 30 | 30 | 30 | 30 | 30 | 30 | 30 | 70 | 1000 |
| Crystal structure | ○ | ○ | ○ | ○ | ○ | ○ | ○ | × | ○ |
| Thermal decomposition temperature (°C) | 350 | 350 | 350 | 350 | 350 | 320 | 320 | 300 | 300 |
| Modification degree AI (%) | 1.7 | 1.9 | 1.3 | 1.5 | 1.3 | 0.9 | 0.8 | 0 | 0 |
| Saturated absorptivity R (%) | ○ | ○ | ○ | ○ | ○ | ○ | ○ | × | × |
| XRD | ○ | ○ | ○ | ○ | ○ | ○ | ○ | Δ | ○ |

As shown in Table 1, the composite resin compositions of Examples 1 to 5 and Reference Examples 1 and 2 were excellent in terms of the saturated absorptivity. In addition, the composite resin compositions of Examples 1 to 5 in which the cellulose nanofibers modified using vinyl carboxylate was used were excellent in terms of the thermal decomposition temperature.

The modification degree and the degree of crystallinity of the cellulose nanofibers obtained from Examples 1 and 2 were compared with those of the acetylated cellulose nanowhiskers in which vinyl acetate was used with the same method (reference: Macromol. Biosci., volume 9, pp. 997 to 1003, 2009). The results thereof were listed in Table 2.

[Table 2]

| | Example 1 | Example 2 | Reference | |
|---|---|---|---|---|
| Modification degree | 1.7 | 1.9 | 1.7 | 1.6 |
| Crystallinity | 91 | 84 | 71 | 74 |

As shown in Table 2, the cellulose nanofibers of Examples 1 and 2 showed higher degree of crystallinity compared to the cellulose nanowhiskers described in the reference even though both had the same degree of modification degree.

The molded bodies of the respective Examples, Reference Examples, and Comparative Examples were measured by the following test method, and the results thereof were listed in Table 3.

(1) Moldability

The obtained composite resin compositions containing the cellulose nanofibers were thermally melted and molded, and the molded state was determined by visual observation. "○" indicates a case where the moldability was excellent, and "×" indicates a case where the moldability was poor.

(2) Linear thermal expansion coefficient

A linear thermal expansion coefficient between 100°C and 180°C was measured using Thermo plus TMA8310 (manufactured by Rigaku Corporation) in an air atmosphere at a heating rate of 5°C/min. The size of a test sample was set to 20 mm (length) × 5 mm (width). First, a first-run was carried out at a temperature range of room temperature to Tg, and then the temperature was cooled to room temperature and a second-run is carried out. From the results, a linear thermal expansion coefficient was calculated by the following formula.

$$\text{Linear thermal expansion coefficient} = (\text{length at a time point of } 180°\text{C} - \text{length at a time point of } 40°\text{C}) / \text{length at a time point of } 40°\text{C} \times 100 - 100$$

In the case where the linear thermal expansion coefficient was 5% or more, it was indicated as ○ (excellent), and in the case where the linear thermal expansion coefficient was less than 5%, it was indicated as × (poor).

[Table 3]

| | Example 1 | Example 2 | Example 3 | Example 4 | Example 5 | Reference Example 1 | Reference Example 2 | Comparative Example 1 | Comparative Example 2 |
|---|---|---|---|---|---|---|---|---|---|
| Moldability | ○ | ○ | ○ | ○ | ○ | ○ | ○ | × | × |
| Linear thermal expansion coefficient | ○ | ○ | ○ | ○ | ○ | ○ | ○ | ○ | × |

As shown in Table 3, the molded bodies of Examples 1 to 5 showed moldability and linear thermal expansion coefficient superior to those of the molded bodies of Comparative Examples 1 and 2.

Industrial Applicability

It is possible to provide cellulose nanofibers having a high modification degree of a hydroxyl group, a high degree of crystallinity, and excellent reinforcement efficacy.
Further, it is possible to provide a method for efficiently producing the cellulose nanofibers, a composite resin composition containing the cellulose nanofibers, and a molded body formed by molding the composite resin composition.

## Claims

1. Cellulose nanofibers, having an average degree of polymerization of 600 or more to 30000 or less, an aspect ratio of 20 or more to 10000 or less, an average diameter of 1 nm or more to 800 nm or less, and an Iβ-type crystal peak in an X-ray diffraction pattern,
wherein a hydroxyl group in the cellulose nanofibers is ester-modified and has a modification degree of 1.0 or more based on all of the hydroxyl groups.

2. The cellulose nanofibers according to claim 1, wherein a thermal decomposition temperature of the cellulose nanofibers is equal to or more than 330°C.

3. The cellulose nanofibers according to claim 1 or 2, wherein a saturated absorptivity of the cellulose nanofibers in an organic solvent having an SP value of 8 or more to 13 or less is 300% or more to 5000% or less by mass.

4. The cellulose nanofibers according to claim 3, wherein the organic solvent is a water-insoluble solvent.

5. The cellulose nanofibers according to any one of claims 1 to 4, wherein the X-ray diffraction pattern in which the range of $\theta$ is 0 to 30 has one or two peaks when $\theta$ satisfies the equation of $14 \leq \theta \leq 18$, has one or two peaks when $\theta$ satisfies the equation of $20 \leq \theta \leq 24$, and otherwise have no peaks.

6. A composite resin composition, comprising the cellulose nanofibers according to any one of claims 1 to 5 in a resin.

7. A molded body which is formed by molding the composite resin composition according to claim 6.

8. A method for producing cellulose nanofibers, comprising a process of ester-modifying a hydroxyl group of cellulose nanofibers which have an average degree of polymerization of 600 or more to 30000 or less, an aspect ratio of 20 or more to 10000 or less, an average diameter of 1 nm or more to 800 nm or less, and an Iβ-type crystal peak in an X-ray diffraction pattern, using vinyl carboxylate.

9. A method for producing cellulose nanofibers, comprising a process of : swelling a cellulose raw material in a solution containing an ionic liquid; and adding vinyl carboxylate thereto, filtering, and washing the cellulose raw material.

*FIG. 1*

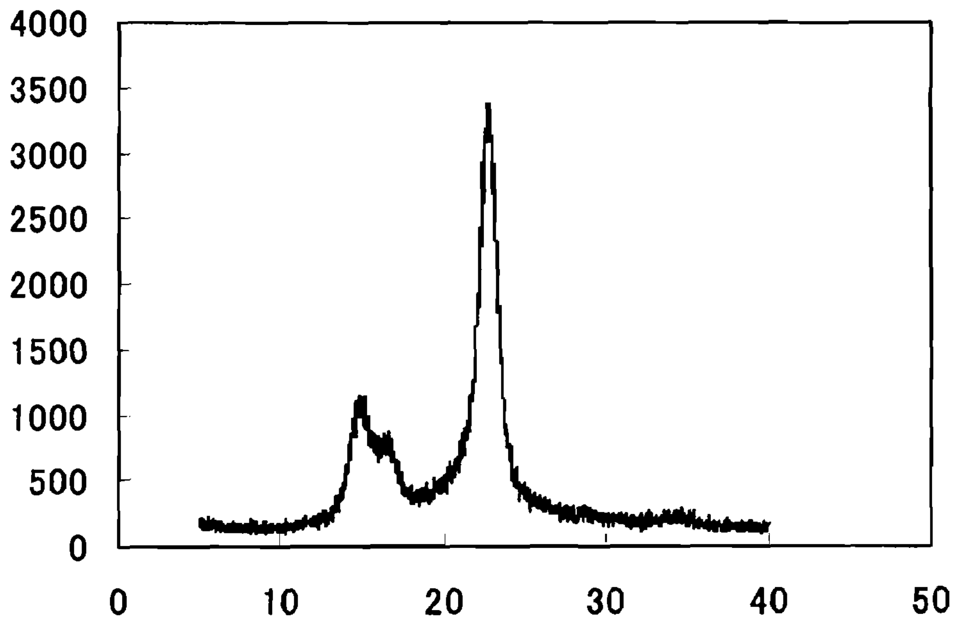

**INTERNATIONAL SEARCH REPORT**

International application No.
PCT/JP2012/067753

A. CLASSIFICATION OF SUBJECT MATTER
*C08B3/20*(2006.01)i, *C08B3/06*(2006.01)i, *C08J3/12*(2006.01)i, *C08L1/10*(2006.01)i, *C08L101/00*(2006.01)i

According to International Patent Classification (IPC) or to both national classification and IPC

B. FIELDS SEARCHED

Minimum documentation searched (classification system followed by classification symbols)
C08B3/20, C08B3/06, C08J3/12, C08L1/10, C08L101/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2010-104768 A (KRI Inc.), 13 May 2010 (13.05.2010), claims 1 to 16; paragraphs [0013], [0040], [0042], [0046], [0060], [0065]; examples 1 to 6; fig. 1 to 14 (Family: none) | 1-7<br>1-9 |
| Y | JP 2006-265544 A (Chiba Flour Mill Co., Ltd.), 05 October 2006 (05.10.2006), claims 1 to 8; paragraphs [0004] to [0008], [0013]; examples 1 to 12 (Family: none) | 1-9 |
| Y | JP 2005-120052 A (Kabushiki Kaisha Cyclochem), 12 May 2005 (12.05.2005), claims 1 to 5; paragraphs [0009] to [0023] (Family: none) | 1-9 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 August, 2012 (02.08.12) | 14 August, 2012 (14.08.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2012/067753

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2008/053820 A1 (Japan Van & Poval Co., Ltd.), 08 May 2008 (08.05.2008), claims 1 to 7; paragraphs [0002] to [0016]; examples 1 to 4 (Family: none) | 1-9 |
| P,X<br>P,A | WO 2011/108461 A1 (Olympus Corp.), 09 September 2011 (09.09.2011), claims 5 to 11; examples 1 to 4; fig. 1 & JP 2011-184816 A | 1-7<br>8-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011185041 A
- JP 2009179913 A
- JP H11513425 W


### Non-patent literature cited in the description


- *Macromol. Biosci,* 2009, vol. 9, 997-1003
- *Macromolecules,* 1985, vol. 18, 2394-2401
- *Macromol. Biosci.,* 2009, vol. 9, 997-1003